# EUROPEAN PATENT SPECIFICATION

(11) **EP 3 800 340 B1**
(45) Date of publication and mention of the grant of the patent: **11.09.2024**
(21) Application number: 19216033.1
(22) Date of filing: 13.12.2019
(51) Int. Cl.: F02C 7/236, F02C 7/26, F02C 9/28

(54) **ELECTRIC PUMP ASSISTED FUEL SYSTEM**
ELEKTRISCHES PUMPENUNTERSTÜTZTES KRAFTSTOFFSYSTEM
SYSTÈME DE CARBURANT ASSISTÉ PAR POMPE ÉLECTRIQUE

(30) Priority: 04.10.2019 US 201916593746
(43) Date of publication of application: 07.04.2021
(73) Proprietor: Hamilton Sundstrand Corporation, Charlotte, NC 28217-4578 (US)
(72) Inventor: SUSCA, Ryan, Windsor, CT Connecticut 06095 (US); REUTER, Charles E., Granby, CT Connecticut 06035 (US); MASTROCOLA, Naison E., Goshen, CT Connecticut 06756 (US); MILES, Gary L., Stillman Valley, IL Illinois 61084 (US); BAYLES, Robert A., Belvidere, IL Illinois 61008 (US); STOICESCU, Adrian L., Roscoe, IL Illinois 61073 (US); PETERS, Jesse, Windsor, CT Connecticut 06095 (US)
(74) Representative: Dehns

(56) References cited:
- EP-A1- 3 051 102
- EP-A1- 3 530 909
- US-A1- 2019 257 250
- US-B2- 9 677 477

## Description

### Background

### Technological Field

This disclosure is related to fuel systems using centrifugal or rotary fuel pumps, particularly to fuel systems including an electrical startup Document EP3530909A1 discloses a fuel system according to the prior art.

### Description of Related Art

Fuel pumps for aircraft gas turbines have generally been positive displacement types, most often gear pumps. These pumps are normally driven at a fixed ratio to engine speed. Positive displacement pumps have two major advantages over centrifugal pumps, which make them attractive for use as gas-turbine fuel pumps. First, this type of pump exhibits good dry suction characteristics, eliminating the necessity of boost pumps for priming. Secondly, positive displacement pumps provide sufficient pressure over a wide range of engine speeds. The pump sizing point typically is the flow and pressure needed for engine light-off at cranking speeds. This sizing criteria, however, results in excessive fuel delivery at higher engine speeds and altitudes, since the pump speed is tied to engine speed. This overflow requires a fuel bypass loop. Bypass and recirculation of fuel, though, results in significant fuel heating.

With the latest fuel efficient engine designs, excessive fuel heating becomes a serious problem. Reduced engine fuel consumption is accompanied by increased engine and lubrication system temperatures. With lower fuel temperatures, fuel/oil heat exchangers are capable of removing more heat from the lubrication oil, reducing the thermal load and therefore size of the air/oil heat exchangers. Associated with the air/oil heat exchangers is a significant drag and weight penalty to the aircraft.

Centrifugal pumping systems offer reduced fuel temperature rise when compared to a positive displacement pump. These pumps can simply be throttled to eliminate excess fuel delivery, so no flow bypass loop is needed. The largest heat savings is at low flows and high engine speeds, where bypass flow in a positive displacement system is at a maximum. Other advantages include increased reliability and decreased weight. Centrifugal pumps are rarely used as aircraft fuel pumps, however, because of their inability to supply adequate pressure at low speeds and their poor dry suction characteristics. EP 3530909 A1 discloses a fuel system for an engine according to the preamble of claim 1. EP 30151102 A1 discloses an alternative fuel system for an engine.

The conventional methods and systems have generally been considered satisfactory for their intended purpose. However, there is still a need in the art for fuel systems having improved reliability, specifically at low speeds. There also remains a need in the art for such fuel systems and components that are economically viable. The present disclosure may provide a solution for at least one of these remaining challenges.

### Summary of the Invention

According to a first aspect, there is provided a fuel system for an engine according to claim 1.

When the startup flow is at a higher pressure than the main flow, the switching valve is biased to the first position, wherein when the startup flow is at a lower pressure than the main flow, the switching valve is biased to the second position, and the startup flow is shut down. The main pump can be a centrifugal pump, and the system can include a boost pump configured to provide a boost flow at a boost pressure to the electrically driven startup pump and the main pump by a controller configured to drive the electrically driven startup pump in a startup state of the engine. The controller can be configured to turn off the electrically driven startup pump when the switching valve transitions to or is in the second position.

According to a second aspect, there is provided a method of controlling the system at startup according to claim 7.

Once the start pump is energized, flow is produced and the pressure regulating valve (PRV) opens to bypass flow and limit the pressure to the rest of the fuel system. The valve will open and close to change system pressure/bypass flow based on fuel system demand, and when the main pump pressure is higher than start pump pressure, the switching valve will select the main pump and forcing the PRV on the start pump to open to its maximum to bypass all flow until the controller shuts down the start pump and the PRV will close as the start pump winds down. The second position of the pressure regulating valve is fully closed and can include multiple positions between fully closed and fully open.

Further the pressure regulating valve actuates from the first position to the second position when the electric motor shuts down. The first position is used for engine startup and engine idle and wherein the second position is used for run mode, during cruise of an aircraft.

### Brief Description of the Drawings

So that those skilled in the art to which the subject invention appertains will readily understand how to make and use the devices and methods of the subject invention without undue experimentation, preferred embodiments thereof will be described in detail herein below, by way of example only and with reference to certain figures, wherein:
Fig. 1 is schematic view of a fuel system, showing during startup; and
Fig. 2 is a schematic view of Fig. 1, showing the fuel system in normal operation.

### Detailed Description

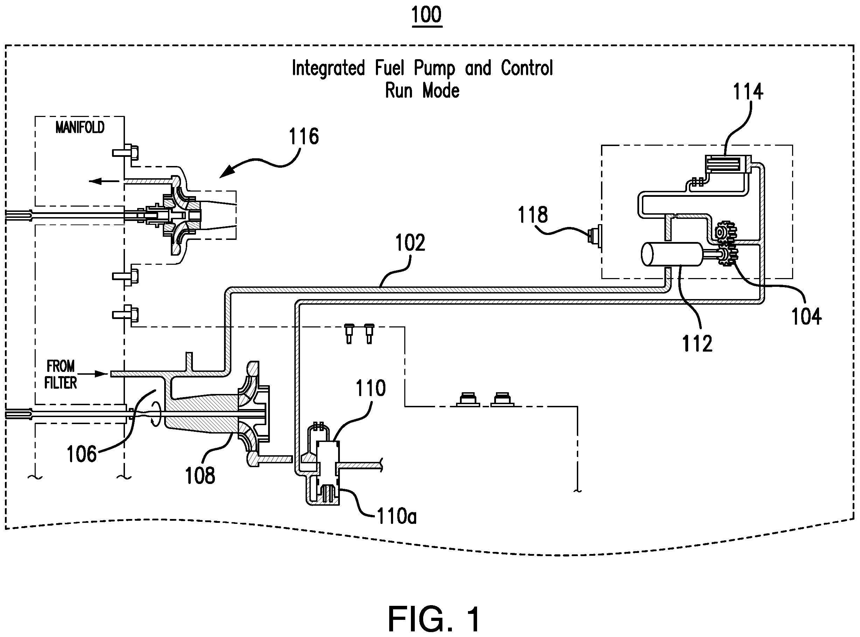

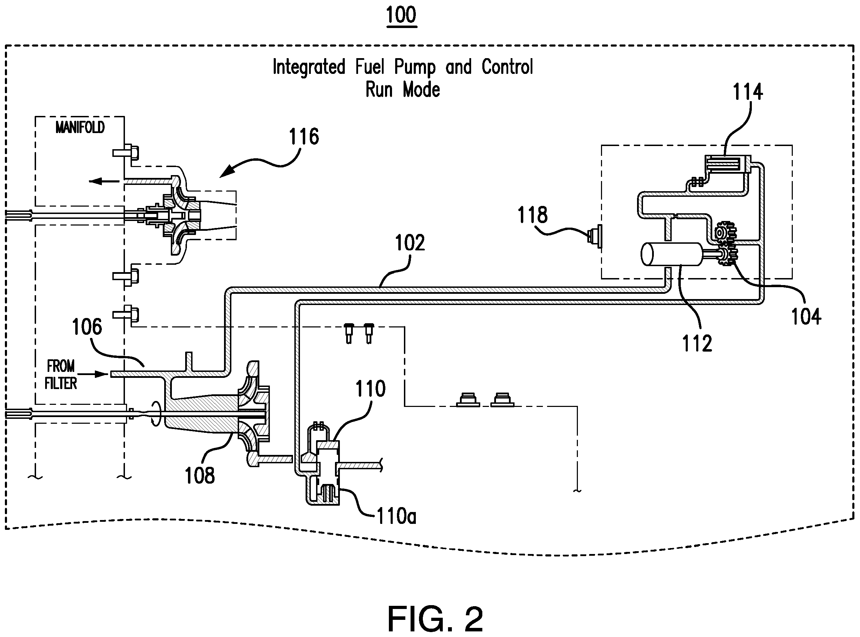

Reference will now be made to the drawings wherein like reference numerals identify similar structural features or aspects of the subject invention. For purposes of explanation and illustration, and not limitation, a partial view of an exemplary embodiment of a fuel system in accordance with the invention is shown in Fig. 1 and is designated generally by reference character 100. Other aspects of the fuel system, are provided in Fig. 2, as will be described. The methods and systems of the disclosure can be used to meet the aircraft pump needs at low and start up speeds with two pumps that overcomes the problems of the prior designs. It is a more specific object to provide an electrically driven positive displacement pump or dynamic pump with self-priming capability to be used a starting stage that supplies adequate pressure during engine start-up and up to idle speeds, as well as good dry suction characteristics.

Figure 1 shows a fuel system 100 for an engine of an aircraft in a start-up mode. The system includes a first flow line 102, an electrically driven startup pump 104 in fluid communication with the first flow line 102. The fuel system 100 further includes a main flow line 106 and a main pump 108 in fluid communication with the main flow line 106, wherein the main flow line 106 branches off from and is in fluid communication with the first flow line 102. The main pump can be a centrifugal pump but other pumps are conceived to be capable. The fuel system further includes a switching valve 110 connected to a downstream portion of the first flow line 102, past the electrically driven startup pump and the main flow line 106, the switching valve 110 is configured to select between the first flow line 102 and the main flow line 106 to output either the startup flow or the main flow to downstream components. An electric motor 112 is connected to and configured to drive the electrically driven startup pump 104. The electrically driven startup pump 104 can be a gear pump, a centrifugal pump, or a regenerative pump. The electrically driven startup 104 allows the fuel system 100 to build pressure until such a point that the main pump 108 is able to operate. The electrically driven startup 104 allows for a smaller overall system, as the main pump 108 only has to be sized for cruise portions of the flight envelope. The fuel system also includes a pressure regulating valve 114 in fluid communication with the electrically driving startup pump 104 for switching between a first position and a second position. In the first position the pressure regulating valve 114 allows for flow to the electrically driven startup pump 104, whereas in the second position the switching valve 110 is bypassed. The pressure regulating valve 114 allows excess flow back to the inlet of the startup pump 104. The pressure regulating valve 114 is in the open position when the start pump 104 is operating, otherwise the pressure regulating valve 114 is closed. The switching valve 110 also switches between a first position 110a wherein the switching valve 110 selects the first flow line 102 to for startup flow and a second position 110b wherein the switching valve selects the main flow line as a function of pressure differential between the main flow and the startup flow.

When the startup flow is at a higher pressure than the main flow, the switching valve 110 is biased to the first position 110a, and wherein when the startup flow is at a lower pressure than the main flow, the switching valve is biased to the second position 110b. A boost pump 116 is included to provide boost flow at a boost pressure to the electrically driven startup pump 104 and the main pump 108. The boost pump 116 is also preferred to be a centrifugal pump but other pump types are possible. A controller 118 is included to drive the electrically driven startup pump 104 and to drive both the pressure regulating valve 114 and the switching valve 110. The controller 118 is conceived to be a FADEC and is configured to turn off the electrically driven startup pump 102 when the switching valve 110 transitions to or is in the second position 110b. Each of the valves 110, 114 are purely mechanical and only change positions based on pressure. The controller 118 or FADEC is configured to control the electrically driven start pump, and a range of main pump 108 speeds. The main pump 108 is sized and configured such that a speed of the main pump 108 that triggers the electrically driven start pump 104 to shut off will be higher than a maximum speed at which the switching valve 110 moves to the closed positon 110b. The electrically driven startup pump 104 is designed to only be utilized for a few minutes to start the engine and bring the engine up to idle speeds. From there the gearbox driven centrifugal main pump 108 will take over pumping duties from the start stage and will provide fuel from idle to maximum engine speed. This stage will realize the benefits of increased fuel pressure and heat savings.

The methods and systems of the present disclosure, as described above and shown in the drawings, provide for fuel metering system with superior properties including increased reliability and reduced size, weight, complexity, and/or cost. While the apparatus and methods of the subject disclosure have been showing and described with reference to embodiments, those skilled in the art will readily appreciate that changes and/or modifications may be made thereto without departing from the scope of the subject disclosure as defined by the claims.

## Claims

1. A fuel system (100) for an engine, comprising:
a first flow line (102);
an electrically driven startup pump (104) in fluid communication with the first flow line to provide a startup flow;
a main flow line (106);
a main pump (108) in fluid communication with the main flow line to provide a main flow;
a switching valve (110) connected to the first flow line and the main flow line and downstream of both the electrically driven startup pump (104) and the main pump (108), the switching valve configured to actuate between a first position and a second position to allow fluid communication with the first flow line or the main flow line, respectively, based on a pressure differential to output either the startup flow or the main flow, wherein in the first position the switching valve is configured to select the first flow line to output the startup flow, and in the second position, the switching valve is configured to select the main flow line to output the main flow; **characterized in that** the switching valve selects the main flow line as a function of pressure differential between the main flow and the startup flow; and
a pressure regulating valve (114) in fluid communication with the electrically driven startup pump and configured for switching between a first position of the pressure regulating valve and a second position of the pressure regulating valve, wherein in the first position of the pressure regulating valve, the pressure regulating valve allows flow to the electrically driven startup pump and wherein in the second position of the pressure regulating valve, the pressure regulating valve allows flow to bypass the switching valve and allows excess flow back to the inlet of the electrically driven startup pump.

2. The fuel system of claim 1, further comprising an electric motor (112) configured to drive the electrically driven startup pump.

3. The fuel system of claim 1 or 2, wherein the electrically driven startup pump is a gear pump, a centrifugal pump, or a regenerative pump; and/or wherein the main pump is a centrifugal pump.

4. The fuel system of any preceding claim, wherein when the startup flow is at a higher pressure than the main flow, the switching valve is biased to the first position, wherein when the startup flow is at a lower pressure than the main flow, the switching valve is biased to the second position.

5. The fuel system of any preceding claim, further comprising a boost pump (116) configured to provide a boost flow at a boost pressure to the electrically driven startup pump and the main pump.

6. The fuel system of any preceding claim, further comprising a controller (118) configured to drive the electrically driven startup pump in a startup state of the engine; optionally wherein the controller is configured to turn off the electrically driven startup pump when the switching valve transitions to or is in the second position.

7. A method of engine startup control for the fuel system of claim 1 comprising:
monitoring a pressure of a main pump (108) of an engine using a controller (118), FADEC;
supplying fuel to a startup
pump (104) from a boost pump (116) and driving an electric motor (112) of an electrically driven pump assembly to increase pressure within the main pump; and
mechanically actuating a pressure regulating valve (114) within the electrically driven pump assembly from a first position to a second position, when a predetermined main pump pressure is reached; the method **characterized by**
switching the switching valve between a first position wherein the switching valve selects the first flow line to pass the startup flow and a second position wherein the switching valve selects the main flow line as a function of pressure differential between the main flow and the startup flow.

8. The method of claim 7, wherein the second position of the pressure regulating valve is fully closed.

9. The method of claim 7 or 8, wherein the pressure regulating valve includes multiple positions between fully closed and fully open.

10. The method of claim 7, 8, or 9, further comprising mechanically actuating the switching valve (110) located downstream of the centrifugal main pump from a first position to a second position when the pressure regulating valve actuates from the first position to the second position.

11. The method of any of claims 7 to 10, wherein the pressure regulating valve actuates from the first position to the second position when the electric motor shuts down.

12. The method of any of claims 7 to 11, wherein the first position is used for engine startup or wherein the first position is used for engine idle.

13. The method of any of claims 7 to 12, wherein the second position is used for run mode; optionally wherein the run mode is during cruise of an aircraft.

## Patentansprüche

1. Kraftstoffsystem (100) für einen Motor, Folgendes umfassend:
eine erste Strömungsleitung (102);
eine elektrisch angetriebene Startpumpe (104) in Fluidverbindung mit der ersten Strömungsleitung, um eine Startströmung bereitzustellen;
eine Hauptströmungsleitung (106);
eine Hauptpumpe (108) in Fluidverbindung mit der Hauptströmungsleitung, um eine Hauptströmung bereitzustellen;
ein Umschaltventil (110), das mit der ersten Strömungsleitung und der Hauptströmungsleitung verbunden ist und sich stromabwärts sowohl der elektrisch angetriebenen Startpumpe (104) als auch der Hauptpumpe (108) befindet, wobei das Umschaltventil so konfiguriert ist, dass es zwischen einer ersten Position und einer zweiten Position betätigt wird, um basierend auf einem Druckunterschied eine Fluidkommunikation mit der ersten Strömungsleitung oder der Hauptströmungsleitung zu ermöglichen, um entweder die Startströmung oder die Hauptströmung auszugeben, wobei das Umschaltventil in der ersten Position so konfiguriert ist, dass es die erste Strömungsleitung auswählt, um die Startströmung auszugeben, und das Umschaltventil in der zweiten Position so konfiguriert ist, dass es die Hauptströmungsleitung auswählt, um die Hauptströmung auszugeben;
und
**dadurch gekennzeichnet, dass** das Umschaltventil die Hauptströmungsleitung in Abhängigkeit von dem Druckunterschied zwischen der Hauptströmung und der Startströmung auswählt; und
ein Druckregelventil (114), das in Fluidverbindung mit der elektrisch angetriebenen Startpumpe steht und zum Umschalten zwischen einer ersten Position des Druckregelventils und einer zweiten Position des Druckregelventils konfiguriert ist, wobei das Druckregelventil in der ersten Position des Druckregelventils eine Strömung zu der elektrisch angetriebenen Startpumpe ermöglicht und wobei das Druckregelventil in der zweiten Position des Druckregelventils eine Strömung zum Umgehen des Umschaltventils ermöglicht und eine überschüssige Strömung zurück zu dem Einlass der elektrisch angetriebenen Startpumpe ermöglicht.

2. Kraftstoffsystem nach Anspruch 1, ferner einen Elektromotor (112) umfassend, der zum Antrieb der elektrisch angetriebenen Startpumpe konfiguriert ist.

3. Kraftstoffsystem nach Anspruch 1 oder 2, wobei die elektrisch angetriebene Startpumpe eine Zahnradpumpe, eine Kreiselpumpe oder eine regenerative Pumpe ist; und/oder wobei die Hauptpumpe eine Kreiselpumpe ist.

4. Kraftstoffsystem nach einem der vorhergehenden Ansprüche, wobei das Umschaltventil in die erste Position vorgespannt ist, wenn die Startströmung einen höheren Druck aufweist als die Hauptströmung, wobei das Umschaltventil in die zweite Position vorgespannt ist, wenn die Startströmung einen niedrigeren Druck aufweist als die Hauptströmung.

5. Kraftstoffsystem nach einem der vorhergehenden Ansprüche, ferner eine Ladedruckpumpe (116) umfassend, die dazu konfiguriert ist, der elektrisch angetriebenen Startpumpe und der Hauptpumpe eine Ladedruckströmung mit Ladedruck bereitzustellen.

6. Kraftstoffsystem nach einem der vorhergehenden Ansprüche, ferner eine Steuerung (118) umfassend, die dazu konfiguriert ist, die elektrisch angetriebene Startpumpe in einem Startzustand des Motors anzutreiben; wobei die Steuerung optional dazu konfiguriert ist, die elektrisch angetriebene Startpumpe abzuschalten, wenn das Umschaltventil in die zweite Position übergeht oder sich in dieser befindet.

7. Verfahren zur Motorstartsteuerung für das Kraftstoffsystem nach Anspruch 1, Folgendes umfassend:
Überwachen eines Drucks einer Hauptpumpe (108) eines Motors unter Verwendung einer Steuerung (118), FADEC;
Zuführen von Kraftstoff von einer Ladedruckpumpe (116) zu einer Startpumpe (104) und Antreiben eines Elektromotors (112) einer elektrisch angetriebenen Pumpenanordnung, um den Druck innerhalb der Hauptpumpe zu erhöhen; und
mechanisches Betätigen eines Druckregelventils (114) innerhalb der elektrisch angetriebenen Pumpenanordnung von einer ersten Position in eine zweite Position, wenn ein vorgegebener Hauptpumpendruck erreicht ist; wobei das Verfahren **gekennzeichnet ist durch**
Umschalten des Umschaltventils zwischen einer ersten Position, in der das Umschaltventil die erste Strömungsleitung auswählt, um die Startströmung durchzulassen, und einer zweiten Position, in der das Umschaltventil die Hauptströmungsleitung in Abhängigkeit von dem Druckunterschied zwischen der Hauptströmung und der Startströmung auswählt.

8. Verfahren nach Anspruch 7, wobei die zweite Position des Druckregelventils vollständig geschlossen ist.

9. Verfahren nach Anspruch 7 oder 8, wobei das Druckregelventil mehrere Positionen zwischen vollständig geschlossen und vollständig geöffnet beinhaltet.

10. Verfahren nach Anspruch 7, 8 oder 9, ferner umfassend das mechanische Betätigen des Umschaltventils (110), das sich stromabwärts der Hauptkreiselpumpe befindet, von einer ersten Position in eine zweite Position, wenn das Druckregelventil von der ersten Position in die zweite Position betätigt wird.

11. Verfahren nach einem der Ansprüche 7 bis 10, wobei das Druckregelventil von der ersten Position in die zweite Position betätigt wird, wenn der Elektromotor abgeschaltet wird.

12. Verfahren nach einem der Ansprüche 7 bis 11, wobei die erste Position zum Starten des Motors verwendet wird oder wobei die erste Position für den Motorleerlauf verwendet wird.

13. Verfahren nach einem der Ansprüche 7 bis 12, wobei die zweite Position für den Betriebsmodus verwendet wird; optional wobei der Betriebsmodus während des Fluges eines Flugzeugs erfolgt.

## Revendications

1. Système de carburant (100) pour un moteur, comprenant :
une première conduite d'écoulement (102) ;
une pompe de démarrage à entraînement électrique (104) en communication fluidique avec la première conduite d'écoulement pour fournir un écoulement de démarrage ;
une conduite d'écoulement principale (106) ;
une pompe principale (108) en communication fluidique avec la conduite d'écoulement principale pour fournir un écoulement principal ;
une vanne de commutation (110) reliée à la première conduite d'écoulement et à la conduite d'écoulement principale et en aval à la fois de la pompe de démarrage à entraînement électrique (104) et de la pompe principale (108), la vanne de commutation étant configurée pour s'actionner entre une première position et une seconde position pour permettre une communication fluidique avec la première conduite d'écoulement ou la conduite d'écoulement principale, respectivement, sur la base d'un différentiel de pression pour délivrer soit l'écoulement de démarrage, soit l'écoulement principal, dans lequel dans la première position la vanne de commutation est configurée pour sélectionner la première conduite d'écoulement pour délivrer l'écoulement de démarrage, et dans la seconde position, la vanne de commutation est configurée pour sélectionner la conduite d'écoulement principale pour délivrer l'écoulement principal ;
et
**caractérisé en ce que** la vanne de commutation sélectionne la conduite d'écoulement principale en fonction d'un différentiel de pression entre l'écoulement principal et l'écoulement de démarrage ; et
une vanne de régulation de pression (114) en communication fluidique avec la pompe de démarrage à entraînement électrique et configurée pour commuter entre une première position de la vanne de régulation de pression et une seconde position de la vanne de régulation de pression, dans lequel dans la première position de la vanne de régulation de pression, la vanne de régulation de pression permet l'écoulement vers la pompe de démarrage à entraînement électrique et dans la seconde position de la vanne de régulation de pression, la vanne de régulation de pression permet à l'écoulement de contourner la vanne de commutation et permet à l'écoulement excédentaire de revenir vers l'entrée de la pompe de démarrage à entraînement électrique.

2. Système de carburant selon la revendication 1, comprenant en outre un moteur électrique (112) configuré pour entraîner la pompe de démarrage à entraînement électrique.

3. Système de carburant selon la revendication 1 ou 2, dans lequel la pompe de démarrage à entraînement électrique est une pompe à engrenages, une pompe centrifuge ou une pompe régénérative ; et/ou dans lequel la pompe principale est une pompe centrifuge.

4. Système de carburant selon une quelconque revendication précédente, dans lequel lorsque l'écoulement de démarrage est à une pression supérieure à l'écoulement principal, la vanne de commutation est sollicitée vers la première position, dans lequel lorsque l'écoulement de démarrage est à une pression inférieure à l'écoulement principal, la vanne de commutation est sollicitée vers la seconde position.

5. Système de carburant selon une quelconque revendication précédente, comprenant également une pompe de suralimentation (116) configurée pour fournir un écoulement de suralimentation à une pression de suralimentation à la pompe de démarrage à entraînement électrique et à la pompe principale.

6. Système de carburant selon une quelconque revendication précédente, comprenant également un dispositif de commande (118) configuré pour entraîner la pompe de démarrage à entraînement électrique dans un état de démarrage du moteur ; éventuellement dans lequel le dispositif de commande est configuré pour arrêter la pompe de démarrage à entraînement électrique lorsque la vanne de commutation passe à ou se trouve dans la seconde position.

7. Procédé de commande de démarrage de moteur pour le système de carburant selon la revendication 1 comprenant :
la surveillance d'une pression d'une pompe principale (108) d'un moteur à l'aide d'un dispositif de commande (118), FADEC ;
la fourniture de carburant à une pompe de démarrage (104) à partir d'une pompe de suralimentation (116) et l'entraînement d'un moteur électrique (112) d'un ensemble pompe à entraînement électrique pour augmenter la pression à l'intérieur de la pompe principale ; et
l'actionnement mécanique d'une vanne de régulation de pression (114) à l'intérieur de l'ensemble pompe à entraînement électrique d'une première position à une seconde position,
lorsqu'une pression de pompe principale prédéterminée est atteinte ; le procédé **caractérisé par**
la commutation de la vanne de commutation entre une première position dans lequel la vanne de commutation sélectionne la première conduite d'écoulement pour laisser passer l'écoulement de démarrage et une seconde position dans lequel la vanne de commutation sélectionne la conduite d'écoulement principale en fonction d'un différentiel de pression entre l'écoulement principal et l'écoulement de démarrage.

8. Procédé selon la revendication 7, dans lequel la seconde position de la vanne de régulation de pression est complètement fermée.

9. Procédé selon la revendication 7 ou 8, dans lequel la vanne de régulation de pression comporte de multiples positions entre complètement fermée et complètement ouverte.

10. Procédé selon la revendication 7, 8 ou 9, comprenant également l'actionnement mécanique de la vanne de commutation (110) située en aval de la pompe principale centrifuge d'une première position à une seconde position lorsque la vanne de régulation de pression s'actionne de la première position à la seconde position.

11. Procédé selon l'une quelconque des revendications 7 à 10, dans lequel la vanne de régulation de pression s'actionne de la première position à la seconde position lorsque le moteur électrique s'arrête.

12. Procédé selon l'une quelconque des revendications 7 à 11, dans lequel la première position est utilisée pour le démarrage du moteur ou dans lequel la première position est utilisée pour le ralenti du moteur.

13. Procédé selon l'une quelconque des revendications 7 à 12, dans lequel la seconde position est utilisée pour le mode d'exécution ; éventuellement dans lequel le mode d'exécution se situe pendant la croisière d'un aéronef.
